# EUROPEAN PATENT APPLICATION

(11) **EP 3 264 679 A1**
(43) Date of publication of application: **03.01.2018**
(21) Application number: 16305809.2
(22) Date of filing: 30.06.2016
(51) Int. Cl.: H04L 12/24, H04L 29/14, H04L 12/26, H04W 24/04, H04W 28/02, H04W 48/18, H04W 4/22, H04W 76/00, H04W 36/16

(54) **METHOD AND SYSTEM FOR ASSURING EMERGENCY CALL SERVICE AND CORRESPONDING COMPUTER PROGRAM PRODUCT AND COMPUTER-READABLE MEDIUM**

(71) Applicant: Orange, 75015 Paris (FR)
(72) Inventor: KIENIG, Jan, 02-691 Warszawa (PL); ONSOWICZ, Marcin, 02-691 Warszawa (PL); AUGUSTYNIAK, Marcin, 02-691 Warszawa (PL)
(74) Representative: Cabinet Plasseraud

(57) **Abstract**

A method for providing an emergency communication service in a communications network operated by a network operator, the communications network comprising a radio access network, RAN, including one or more radio base stations, and a core network, CN, comprising one or more communication nodes for providing service and/or call functionality, the method comprising, for the RAN:
detecting the presence of a malfunction in either the CN (7) or in a communication link between the RAN and at least one communication node in the CN (7);
determining the identity of a mobile node attached to the RAN; and
initiating deregistration or redirection of the mobile node so as to push the mobile node to register to another communications network.

## Description

### Background

### Technical field

The present invention relates to the provision of an emergency call service in a mobile telecommunication system. More particularly, the invention relates to the provision of such a service in the event that communication issues exist within a mobile telecommunications network that supports the mobile telecommunications system.

### Related art

Mobile telephone networks provide access to a telephone system for mobile terminals by providing a wireless communications link between the mobile terminals and a base station, for example by using a Radio Access Network (RAN). This RAN is then usually connected to a core network (CN), which includes connectivity to other networks such as wired telephone network, via one or more base stations.

Typically, each operator of such a mobile telephone network will provide a set of base stations that together provide coverage for the RAN over an extended area in the form of a plurality of communication cells. In any particular region, more than one operator may provide coverage, and this is typically achieved by each operator providing their own RAN via their own set of base stations.

Mobile terminals are typically associated with a single operator via a subscription, and are therefore configured to operate primarily on the network of that operator. Such a configuration is often achieved using data held within a subscriber identity module (SIM) and/or via configuration settings stored directly within the mobile terminal. Thus, if a user wishes to make a telephone call using their mobile terminal, then their terminal will automatically use one of the base stations provided by the operator with which they subscribe.

In the event that the network to which a user subscribes is unavailable in the user's location, for example due to a lack of coverage in that area, then it may be possible for the user to use the network of a different operator. To do this, the user may have to specifically select the alternative network by manual configuration in their terminal.

Aside from providing a standard mobile telephone service, operators of mobile networks are often also obliged by regulatory bodies to provide emergency call functionality on their network. For such emergency calls, special rules often apply, for example the identity of the user may not be checked in the same manner as for a non-emergency call. This lack of identity check can allow the user to perform an emergency call over any available mobile network without the user needing to manually select the available network. Thus, for the purpose of an emergency call, the user can directly use another operator's network in a situation when the network to which the user subscribes is not available.

However, the placement of an emergency call may not be possible in a situation in which operator's CN is malfunctioning. This can for example occur when there is no communication between the RAN and the CN. In this situation the RAN part may continue to broadcast radio signals for establishing connections with mobile terminals, although telephone calls will not be possible.

For the purpose of making an emergency telephone call this presents a problem since, from the point of the view of the user's mobile terminal, the network is still online. As a result, the mobile terminal will make no attempt to try to use another operator's network, and so the user will be unable to make the emergency call.

Aside from the danger and inconvenience of being unable to make such calls, this situation may result in financial penalties being imposed on the operator by regulatory bodies. Conversely, if the operator were to circumvent the problem by, switching off the RAN when communication between it and the CN is lost, this can lead to a loss of income and damage to the company image of the operator.

EP1773028 discloses a system for establishing emergency voice communications in an IP network by using a peer-to-peer protocol. Thus, if a server providing call functionality is uncontactable a connection to a different server can be made via a peer-to-peer connection

It is therefore an aim of the present invention to overcome, or at least mitigate, some of the above described problems.

### Summary

In a first aspect, there is provided a method for providing an emergency communication service in a communications network operated by a network operator, the communications network comprising a radio access network, RAN, including one or more radio base stations, and a core network, CN, comprising one or more communication nodes for providing service and/or call functionality, the method comprising, for the RAN:
detecting the presence of a malfunction in either the CN or in a communication link between the RAN and at least one communication node in the CN;
determining the identity of a mobile node attached to the RAN; and
initiating deregistration or redirection of the mobile node so as to push the mobile node to register to another communications network.

Thus, advantageously, the claimed method can provide means by which an emergency communication, such as a phone call, can be placed by the mobile node even if there are communications problems in the network of the network operator to which the mobile node is associated.

In some embodiments, the detecting the malfunction comprises:
performing one or more test calls between the RAN and the CN; and
flagging an error state after a predetermined number of failed attempts, or attempts that do not comply with a predefined quality level.

Thus, a simple method of determining the presence of a malfunction in an element of a communications network can be provided.

In some embodiments, the predefined quality level is determined on the basis of whether:
a delay above a predetermined time for achieving the connection occurs;
the Mean Opinion Score, MOS, of the call is below a predefined level; or
if a silent call state occurs.

In some embodiments, the detecting the malfunction comprises:
performing a network communication availability check between the RAN and the CN; and
flagging an error state if the network communication check indicates that the network is determined to be unavailable.

Thus, a simple method of determining the presence of a malfunction in an element of a communications network can be provided.

In some embodiments, the communication availability check is performed at a network layer level by the transmission of a test message, and the malfunction is deemed to be present if there is no response to the message received after a predetermined time and/or after a predetermined number of message attempts.

In some embodiments, the communication availability check is performed in a message transfer part level 3 user adaption, M3UA, layer using the M3UA_BEAT messages, and wherein the malfunction is deemed to be present if no response to the message is received after a predetermined time and/or after a predetermined number of message attempts.

Thus, a simple method of determining the presence of a malfunction in an element of a communications network can be provided.

In some embodiments, the communication availability check is performed using a HEARTBEAT timeout in a stream control transmission protocol, SCTP, and wherein the malfunction is deemed to be present if a HEARTBEAT timeout message is received.

In some embodiments, the detecting the malfunction comprises:
performing, by the RAN, a count of failed calls, or performing an analysis of call quality; and
flagging an error state if a predetermined number of calls in a given period of time fail to comply with a predefined quality level.

Thus, a simple method of determining the presence of a malfunction in an element of a communications network can be provided.

In some embodiments, the detecting the malfunction comprises:
monitoring, by the RAN, call signalling associated with calls performed using the RAN; and
flagging an error state if signalling not compliant with the relevant communication standard is detected for predefined number of calls in a predetermined period of time.

This could entail, for example, incorrect or corrupt messages or messages in an incorrect order being received. Thus, for example, the communications standard in use could be 3GPP TS 24.008 and 3GPP TS 23.108. For a mobile-originating call there is a defined message order (i.e. message flow) and message content. If the received messages are not compliant with the standard-defined call flow or containing messages not compliant with standard, then this would be considered as being not compliant and so an error state would be flagged.

Thus, a simple method of determining the presence of a malfunction in an element of a communications network can be provided.

In some embodiments, the initiating deregistration or redirection of the mobile node comprises one or more of:
redirecting the mobile node to the RAN and CN of a different mobile operator by transmitting a 3GPP message "RRCConnectionRelease" to the mobile node, and performing redirection to the network of the different mobile operator; deregistering the mobile node after a failed attempt at performing an emergency call by configuring the RAN to transmit a message to the mobile node that will cause it to perform a deregistration or disconnection; or
deregistering all mobile nodes connected to the RAN after a failed attempt at performing an emergency call by a mobile node connected to the RAN by configuring the RAN to transmit a message to all connected mobile nodes that will cause them to perform a deregistration or disconnection.

Thus, pre-existing method of deregistering a mobile node can be employed to effect the method.

In some embodiments, the RAN is implemented under the 3GPP standard and the message or messages to cause deregistration or disconnection take the form of "Illegal MS" or "PLMN not allowed" messages.

Thus, advantageously, pre-existing messages can be employed to effect the method.

In some embodiments, the detecting the malfunction is performed on a continuous or periodic basis.

Thus, advantageously, the method can provide a continuous detection of communication problems or other malfunctions.

In a second aspect, there is provided a radio access network, RAN, for enabling the provision of an emergency communication service in a communications network operated by a network operator, the RAN comprising one or more base stations and the communications network comprising the RAN and a core network, CN, comprising one or more communication nodes for providing service and/or call functionality, the RAN further comprising:
means to detect the presence of a malfunction in either the CN or in a communication link between the RAN and at least one communication node in the CN;
means to determine the identity of a mobile node attached to the RAN; and
means to initiate deregistration or redirection of the mobile node so as to push the mobile node to register to another communications network.

In further aspects there are provided a computer program product and a computer readable medium for performing any of the methods of the first aspect.

### Brief description of the drawings

The invention will now be described with reference to the accompanying Figures of which:
Figure 1a illustrates a first set of embodiments of the invention;
Figure 1b illustrates the performance of test calls for the determination of communication issues according to some embodiments;
Figure 1c illustrates the transmission of test messages for the determination of communication issues according to some embodiments;
Figure 2 illustrates a second set of embodiments according to the invention;
Figure 3 illustrates a third set of embodiments according to the invention; and
Figure 4 illustrates a flow chart according to all embodiments of the invention.

### Detailed Description

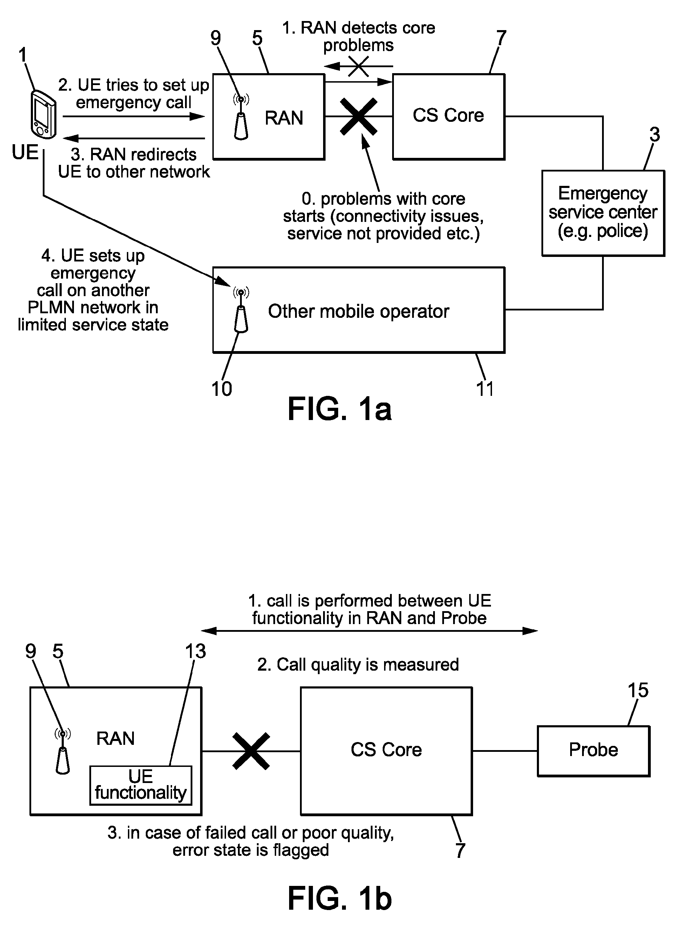

Figure 1a illustrates a scenario according to an embodiment of the invention in which a mobile node (also known as a user equipment (UE) 1 or mobile terminal) is attempting to contact an emergency service provider 3. The UE 1 can be a mobile terminal such as a mobile telephone, smart phone, wireless enabled computer device, a remotely controlled machine or other such device. The UE 1 can be configured to communicate wirelessly using a variety of technologies such as 2G (GSM), 3G (UMTS, CDMA2000), 4G (LTE) and 5G, or a combination of such technologies. The contact with the emergency service provider 3 can take the form of a telephone call, text message, email, voice message, video message, photo message or other electronic communication method.

For the sake of convenience, the description will be explained in terms of telephone calls. However, the skilled person will recognise that any of the other forms of communication listed above could equally be used in place of a telephone call. Moreover, more than one of the above listed forms of electronic communication can be used together.

Broadly speaking, the provision of a mobile telephone service requires two networks; a radio access network (RAN) 5 and a core network (CN) 7. The RAN 5 will typically comprise a plurality of base stations 9 that are configured to communicate with UE 1 via radio frequency (RF) communications. The skilled person will understand how to implement such RF communications and so further explanation will not be provided here. In terms of 2G and 3G communication, the RAN 5 will also comprise one or more radio controllers, and each radio controller can control one or more base stations 9. However in terms of LTE, no radio controller elements are present and the RAN 5 can communicate directly with the CN 7.

The base stations 9 are typically located at points in an area of coverage such that a continuous, or near continuous, area of coverage can be achieved, wherein each base station 9 provides coverage for a part of the overall area in the form of a cell.

Conceptually, the RAN 5 resides between a UE 1 and a CN 7, and provides connection for the UE 1 with its CN 7. The skilled person will recognise that, depending on the standard, mobile phones and other wireless connected devices are varyingly known as user equipment (UE), terminal equipment, mobile station (MS), etc. For the purpose of explaining the embodiments of this invention, the term UE will be used throughout. However, the skilled person will recognise that the described embodiments are applicable to standards other than those which specifically use the term UE. Examples of RAN nodes to which the described embodiments can be applied are Base Transceiver Station (BTS), Base Station Controller (BSC), NodeB (which is the name for a base station under 3G technology), Radio Network Controller (RNC) and eNodeB (which is the name for a base station under LTE technology). However, the described embodiments are not limited to these specific RAN nodes.

The CN 7 can comprise a circuit-switched network, including one or more communication nodes, that provides a communication link between each of the base stations 9 in the RAN 5 and also with other communications networks, such as conventional telephone networks. Alternatively or additionally, the CN 7 can comprise a packet-switched network. For convenience, the figures illustrate embodiments in which the CN 7 is a circuit-switched network. However, the skilled person will recognise that this could be replaced with a packet-switched network or network employing both packet and circuit switching. The CN 7 can be based on wired communications links such as fibre-optic connections or electrical conductors. In addition, other technologies such as RF communications, satellite communications and microwave communication links can be used. Further, a combination of any of these technologies can be employed within a single CN 7. Thus, for example, a RAN 5 may be connected to the CN 7 via a microwave link, and further connections within the CN 7 can be implemented using fibre-optic communications. Example of communication nodes to which the described embodiments can be applied are Mobile Switching Centre (MSC), Gateway Mobile Services Switching Centre (GMSC), Home Location Register (HLR), Visitor Location Register (VLR), Authentication Center (AuC), Equipment Identity Register (EIR) and IP Multimedia Subsystem (IMS). However, the described embodiments are not limited to these specific CS core network nodes.

When placing a telephone call from the UE 1, the UE 1 will first establish communications with the RAN 5 via a base station 9 that is within range of the UE 1. Subsequently, the RAN 5 will communicate with the CN 7 and the CN 7 will route the communications to the desired call destination. The skilled person will recognise that the RAN 5 and CN 7 will in general be operated by a mobile service provider i.e. a telecommunications company that operates on a subscriber basis. Thus, the UE 1 will attempt to establish communications with a RAN 5 that is operated by the telecommunications company with which the UE 1 is associated. This is achieved by configuring the UE 1 to operate primarily on the network of that company. Such configuration is often achieved using data held within a subscriber identity module (SIM) and/or via configuration settings stored directly within the UE 1. As a result, the telecommunications company can control usage of their network by checking the identity of UE 1 that attempt to place telephone calls through the network. Thus, the telecommunications company can either prevent usage of their network by a UE 1 that is subscribed to different a telecommunications company, or alternatively charge the user of the UE 1.

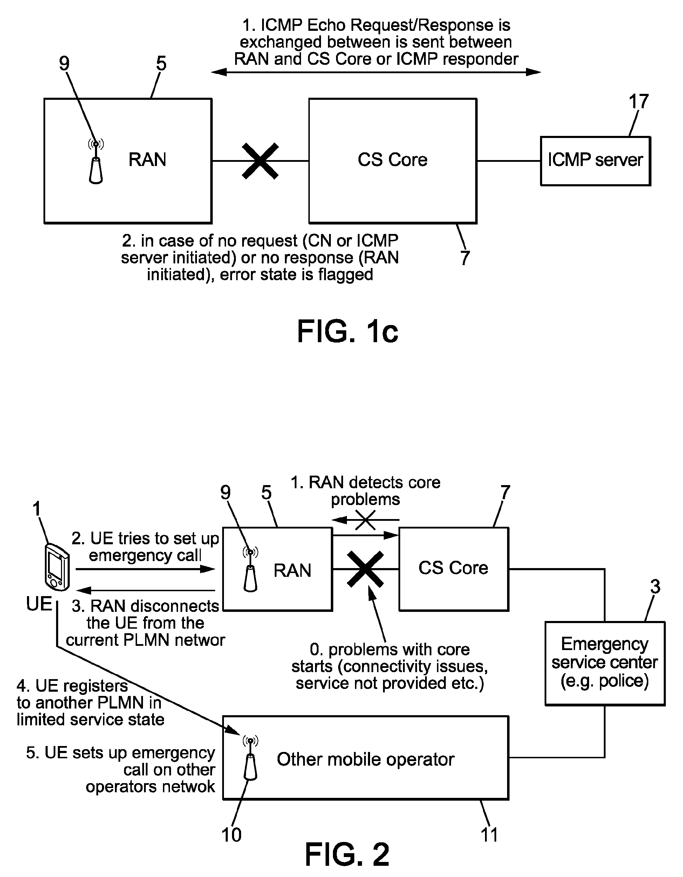

However, in the situation in which a user of a UE 1 wishes to make a telephone call to an emergency service provider 3, the normal rules relating to subscribers do not usually apply. Thus, when making an emergency call, the identity of the UE 1 is not checked and so the UE can make the call over any available RAN and CN. As illustrated in figure 1, this alternative network 11, belonging to a third party, can then relay the telephone call to the emergency service provider 3. The alternative network 11 will also comprise a RAN and CN (both not illustrated), and the RAN will include one or more base stations 10. Examples of such emergency calls include calls to the police, medical services, fire services, coast guard service and other services that are recognised as emergency services or calls to call centres that handle such emergency calls.

The alternative network 11 may be adopted in the event that the RAN 5 and/or CN 7 to which the UE 1 is subscribed are unavailable. This may occur, for example, if the UE 1 is outside of the area of coverage of the RAN 5 of the telecommunications company to which the user subscribes.

However, in the event that the UE 1 is able to contact the RAN 5 of the telecommunications company to which the user subscribes, but the RAN 5 has issues in communicating with its associated CN 7, or if the CN 7 itself has a malfunction, a problem can exist. Such issues are illustrated in figure 1a, as the cross in the indicated communications link between the RAN 5 and the CN 7. The skilled person will recognise that such communication issues can be in either or both directions of the communications link.

This communications issue (or malfunction) will cause a further problem because the RAN 5 will still be broadcasting radio signals to permit a connection between the RAN 5 and the UE 1, and so there is no trigger for the UE 1 to seek an alternative network 11. However, in such a situation no calls will be possible on the RAN 5 and so the emergency call will fail.

To combat this problem, the invention provides means to establish emergency calls in the above described situation. The invention comprises two main stages:
1) Detection of a malfunction. This malfunction can take the form of issues (i.e. communication problems) in the link between the CN 7 and the RAN 5 and/or issues in the CN 7. If it is determined that a communication or Core Network issue exists (i.e. a malfunction exists), then an error state is flagged and the communication link is considered to be unavailable; and
2) Action taken by the RAN 5 with the goal of assuring that emergency and/or other special communications are performed successfully.

### Stage 1

In the first stage, the presently described embodiment provides for the detection of issues with communication or with the CN 7 by use of a service availability check. Such checks can be made periodically. For the sake of convenience, the term "communications issue" will be used here to encompass either a malfunction in the communications link between the RAN 5 and the CN 7, and/or a malfunction in the CN 7 itself.

To do detect communication issues, periodic test calls between the RAN 5 and the CN 7 can be performed. Such calls can be initiated either by the RAN 5 or by the CN 7, or by both the RAN 5 and the CN 7. The performance of such periodic test calls is illustrated in figure 1b.

If the RAN 5 performs a test call, then this can be initiated either by a test terminal (not illustrated) or by UE functionality that is implemented as software 13 resident in an element of the RAN 5. A probe 15 connected to the CN 7 is configured to receive the calls. The RAN 5 can then determine whether a communication issue exists if a test call is not correctly connected. If it is determined that a communication issue exists, then an error state is flagged and the communication link is considered to be unavailable. The skilled person will recognise that the probe 15 can be either implemented as software or hardware that is resident on, or associated with, the CN 7.

Similarly, if the CN 7 initiates the test call, then this initiation will be carried out by the probe 15. At the RAN 5, the test call can be received either by a test terminal or by UE functionality 13 that is implemented as software resident in an element of the RAN 5. The CN 7 can then determine whether a communication issue exists if a test call is not correctly connected.

Typically such test calls will be made at a frequency of approximately once every few minutes, although higher and lower call frequencies can alternatively be implemented. Moreover, it is envisaged that the call frequency can be varied dependent on the particular conditions.

After a predetermined number of failed attempts, or attempts that do not comply with a predefined quality level, a problem with CN 7 is assumed to be detected and so an error state is flagged. The predefined quality level can be determined on the basis of whether the call includes noise above a predetermined level or if a "silent call" occurs. A silent call is defined as a call in which a connection is established but in which no sound can be discerned in either or both of the uplink direction from the call initiator (RAN 5 or CN 7), or the downlink direction from the call receiver.

The measure of call quality can be based on whether the Mean Opinion Score (MOS) of the call is below a predefined level. For example, this can be based on an algorithm using the POLQA Perceptual Objective Listening Quality Assessment (ITU-T Rec. P.863).

Alternatively, the call quality measure can be based on a measured delay in setting up the call. In such an embodiment, the delay can be measured and determined to be compared to a predetermined time period. A delay longer than the predetermined time period can be considered as too long and result in the flagging of an error state.
In alternative or complementary embodiments, the issue detection is based on a network communication availability check. Figure 1c illustrates the performance of such network checks. Such checks can be initiated either by the RAN 5 or from the CN 7 end using an external element such as an Internet Control Message Protocol (ICMP) server 17, or from both the RAN 5 and the CN 7 end. Thus, in such embodiments, if the RAN 5 performs a periodic test of the availability of the CN 7 in the network layer, then this can be achieved using, for example, an ICMP message. Alternatively, or additionally, the ICMP message can be generated by the ICMP server 17 located at the CN 7 end, and transmitted to the RAN 5.

A communication issue is assumed to be detected if there is no response to the message received at the transmitting end after a predetermined time and/or after a predetermined number of message attempts, and so an error state is flagged.

In alternative or complementary embodiments, the communication issue detection is based on performing a periodic test of the network availability in higher layers. As with previous embodiments, such tests can be initiated at either or both of the RAN 5 and CN 7 ends. The tests can, for example, be achieved using the M3UA_BEAT in the M3UA layer. The M3UA layer is the Message Transfer Part (MTP), Level 3 (MTP3) User Adaptation Layer. The skilled person will understand how to implement the M3UA_BEAT functionality and so further explanation will be omitted. An issue is assumed to be detected, and so an error state is flagged, if there is no response to the message sent by RAN 5 or CN 7 after a predetermined time and/or after a predetermined number of message attempts or when the transport (lower layers) connection is determined to be disconnected based on mechanisms specific for the given transport protocol.

In alternative or complementary embodiments, the communication issue detection is based on the RAN 5 performing a periodic test of core network availability in higher layers by using the HEARTBEAT timeout in the stream control transmission protocol (SCTP). The skilled person will understand how to implement the HEARBEAT functionality and so further explanation will be omitted. An issue is assumed to be detected, and so an error state is flagged, if such a HEARTBEAT timeout message is received or when the transport/higher connection is determined to be disconnected.

In each of the embodiments including the transmission/reception of a message to determine whether a communication issue exists, the messages can be transmitted at a frequency of approximately once every few minutes, although higher and lower frequencies can alternatively be implemented. Moreover, it is envisaged that the frequency can be varied dependent on the particular conditions.

In alternative or complementary embodiments, the issue detection is based on failed call count or call quality analysis. In such embodiments, the RAN 5 monitors calls performed by users. If a predetermined number of calls, or if a predetermined fraction of calls, in a given period of time fail to comply with a predefined quality level, then a problem is assumed to be detected, and so an error state is flagged. Here, a call quality measure can be based on whether the Mean Opinion Score (MOS) of the call is below a predefined level. For example, this can be based on an algorithm using the POLQA Perceptual Objective Listening Quality Assessment (ITU-T Rec. P.863).

Alternatively, the call quality measure can be based on a measured delay in setting up the call. In such an embodiment, the delay can be measured and determined to be compared to a predetermined time period. A delay longer than the predetermined time period can be considered as too long and result in the flagging of an error state.

In alternative or complementary embodiments, the issue detection is based on the RAN 5 monitoring call signalling associated with calls performed by users of UEs that are using the communications network provided by the RAN 5 and CN 7. In such embodiments, if signalling that is not compliant with the relevant communications standard is detected, then an error state will be flagged. This could entail, for example, incorrect or corrupt messages or messages in an incorrect order being received.

Thus, for example, the communications standards in use could be 3GPP TS 24.008 and 3GPP TS 23.108. For a mobile-originating call there is a defined message order (i.e. message flow) and message content. If the received messages are not compliant with the standard-defined call flow or contain messages not compliant with standard, then this would be considered as being not compliant and so an error state would be flagged.

The determination of an error state can be based on whether non-compliant signalling is received for a predefined number of calls, or a predetermined fraction of calls, in a predetermined period of time.

For example, if the UE 1 does not receive a response within a predetermined time from the CN 7 for a CS service request, or the response is not compliant with 3GPP TS 24.008 and 3GPP TS 23.108 for a mobile originating call (in terms of the message call flow and message contents), then this may result in an error state being flagged.

In alternative or complementary embodiments, the issue detection is based on an operator of the communications network manually triggering the RAN to flag an error state. This can be achieved by, for example, the operator setting an error state flag in a RAN 5 Operation and Maintenance (OAM) system. The operator can choose to set this error state flag if it becomes apparent that such a communications issue exists.

The skilled person will recognise that more than one of the above means of detection of communication issues can be employed in a single embodiment. Thus, it is specifically envisaged that any number, or all of, the above methods of detecting communication issues can be used in a single embodiment of the present invention. The skilled person will recognise that these means of detection can be used together in a single embodiment either in parallel or in series. Thus, for example, if two such means of detection are applied together in parallel fashion, then this combination can be thought of as a logical "OR" function. In other words, if either of the two means of detection flags that a communication problem exists, then such a communication problem is determined to exist.

Conversely, if two such means of detection are applied in series, then this can be thought of as a logical "AND" function. In other words, both the means of detection must flag the presence of a communication problem in order for the determination of the existence of a communication problem.

The use of more than one means of detection can be used to increase the certainty of error detection and so thereby improve the emergency call handling performance of the communications network.

### Stage 2

Once a communication issue has been detected in stage 1, the second stage is for the RAN 5 to take action to assure that emergency and special calls can be performed successfully. This can include deregistration of the UE 1 from the RAN 5 and/or redirection of the UE 1 to another network. The skilled person will understand that the term deregistration is taken to mean removal of a UE 1 from a network. It is then up to the UE 1 to find another network with which to communicate. In contrast, redirection is taken to include informing the terminal the UE 1 of the details of the other network to which it should switch its connection. Typically this includes transmitting information concerning the frequency on which the alternative network operates.

If the communication problem with CN 7 is detected by the RAN 5, or if the manual configuration is used, then the RAN 5 will perform one or more of the actions described below. In each case, the goal of the action(s) is to allow the UE 1 to successfully perform an emergency or special call by utilizing a third-party operator's network 11.

For this second stage, there are several possible scenarios:

### a) Redirection to another Mobile Network Operator (MNO) network

In the presently described embodiment which is illustrated in figure 1, during setup of the connection between the UE 1 and the RAN 5, the UE 1 is redirected to another operator's network 11 or carrier. This can be achieved for example by using a 3GPP message "RRCConnectionRelease" with Redirection to a carrier not belonging to the home operator (i.e. the public land mobile network (PLMN) to which the owner of the UE 1 subscribes). Alternatively, this can be achieved with a handover to another network PLMN. After being redirected, the UE 1 will be able to successfully perform an emergency call.

### b) Deregistration or disconnection of the UE after an attempted emergency call.

In alternative or complementary embodiments, after the UE 1 has performed an emergency call attempt, the home RAN 5 sends a message to the UE 1 that will cause it to perform a deregistration or disconnection from its home network. This embodiment is illustrated in figure 2.

If the communication standard used by the communications network is 3GPP TS 23.122, then this deregistration/disconnection can be achieved by the RAN 5 sending a message to the UE 1 such as "Illegal MS" or "PLMN not allowed". Under this communications standard, the term deregistration is used here to mean the procedure defined by 3GPP that includes removal of the UE 1 from the CN 7, which all nodes in the CN 7 will, as a result, be aware of. In contrast, the term disconnection is used here to mean disconnection of the UE 1 from the RAN 5. As a result, nodes in the CN 7 may not be made aware that this procedure has been carried out.

The skilled person will recognise that, in the event that a communications standard different from 3GPP TS 23.122 is employed, then the terms "disconnection" and "deregistration" can have different meanings to that defined above. Under such different standards, the skilled person will understand that both terms can have the more general meaning that the UE 1 is in some manner removed from part or all of the RAN 5 or CN 7.

The skilled person will also recognise that messages, other than those given above but having similar effects, can be employed under different telecommunication standards. After receiving one of the above messages, the UE 1 will (according to the 3GPP TS 23.122) assume that the home network is not accessible even though the RAN 5 is still broadcasting radio signals. As a result, the UE 1 will then try to access another MNO. Subsequent attempts to perform an emergency call will be conducted over the network 11 of another mobile operator. If this network 11 is functioning properly then, as with the previous scenario, the UE 1 will be able to successfully perform an emergency call.

### c) Deregistration of all User Equipment.

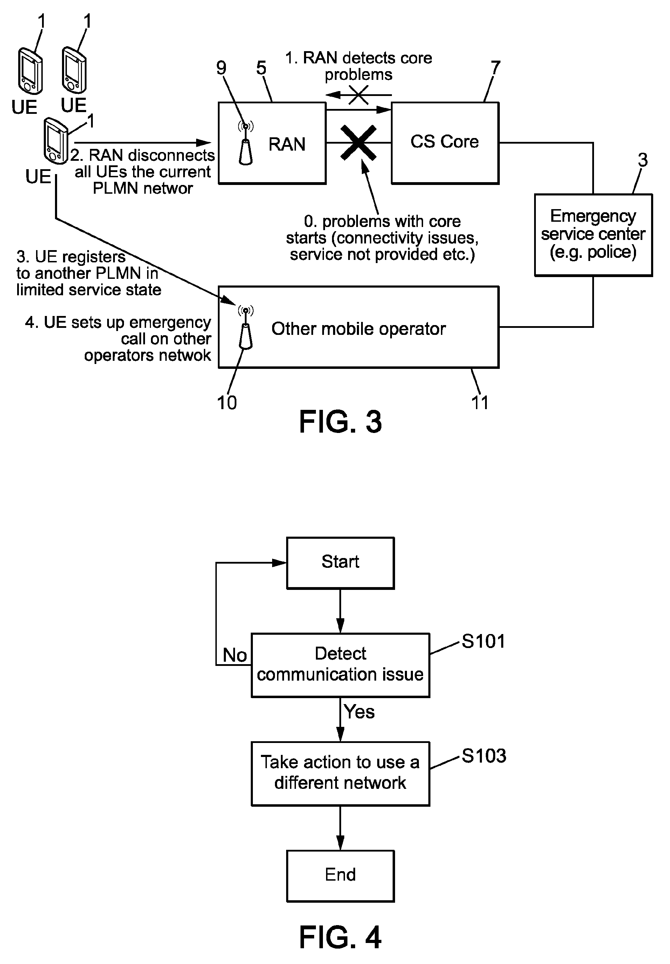

In alternative or complementary embodiments, the home PLMN RAN 5 is configured to send a message to all UEs 1 registered with the RAN 5 that will cause their deregistration or disconnection. This can be achieved by, for example, using messages such as "Illegal MS" or "PLMN not allowed" in case of 3GPP networks. This embodiment is illustrated in figure 3. After receiving such a message (according to the 3GPP TS 23.122 standard), each UE 1 will assume that the home network is not accessible even though the RAN 5 is still broadcasting radio signals. As a result, the UEs 1 will try to access other MNOs. Subsequent attempts to perform an emergency call will be conducted over the network 11 of another mobile operator. If this network 11 is functioning properly then, as with the previous embodiment, the UE 1 will be able to successfully perform an emergency call.

In such scenarios, the operator of the communications network can take the decision whether to deregister the UEs 1 on a one by one basis, or to deregister all at once.

The skilled person will recognise that more than one of the above described means of taking action to assure that emergency and special calls can be performed successfully can be employed. Thus, it is specifically envisaged that any number, or all of, the above methods of taking action to assure that emergency and special calls can be performed successfully can be used in a single embodiment of the present invention. Typically, since each of scenarios a) to c) relates to different conditions, a single embodiment will be configured to employ all of the scenarios and to select the most appropriate dependent on the circumstances.

Figure 4 illustrates a flow chart which is applicable to all of the above described embodiments. As illustrated in figure 4, in a first step S101 the detection of communication issues is carried out by any (or more than one) of the methods described above. Upon the detection of such issues (i.e. "yes" is determined from step S101), an error state is flagged. If an error state is flagged then the method moves to step S103. In step S103, action is taken by the RAN 5 to employ a different operator's communications network, with the goal of assuring that emergency and/or other special calls are performed successfully.

If no issue is detected (i.e. "no" is determined from step S101), then the method returns to the start.

As is noted above, in step S101, any number of the described methods of detection can be employed together in a single embodiment. Similarly, any number of the described methods of taking action, i.e. a) to c) listed above, can also be employed in a single embodiment. Moreover, these methods of taking action can be attempted in any order.

Further, the skilled person will recognise that step S101 will usually be performed on a repeated basis. Thus, the embodiments provide that a continuing detection for possible problems in the CN 7 is carried out. As illustrated in figure 4, the method only moves from step S101 on to S103 in the event that such a problem is detected. If no such problem is detected, then the method returns to the start and once again looks for problems with the CN 7.

Each of the above described embodiments can be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

## Claims

1. A method for providing an emergency communication service in a communications network operated by a network operator, the communications network comprising a radio access network, RAN (5), including one or more radio base stations, and a core network, CN (7), comprising one or more communication nodes for providing service and/or call functionality, the method comprising, for the RAN (5):
detecting the presence of a malfunction in either the CN (7) or in a communication link between the RAN (5) and at least one communication node in the CN (7);
determining the identity of a mobile node attached to the RAN (5); and
initiating deregistration or redirection of the mobile node so as to push the mobile node to register to another communications network.

2. The method of claim 1, wherein the detecting the malfunction comprises:
performing one or more test calls between the RAN (5) the CN (7); and
flagging an error state after a predetermined number of failed attempts, or attempts that do not comply with a predefined quality level.

3. The method of claim 2, wherein the predefined quality level is determined on the basis of whether:
a delay above a predetermined time for achieving the connection occurs;
the Mean Opinion Score, MOS, of the call is below a predefined level; or
if a silent call state occurs.

4. The method of claim 1, wherein the detecting the malfunction comprises:
performing a network communication availability check between the RAN (5) and the CN (7); and
flagging an error state if the network communication check indicates that a malfunction is present.

5. The method of claim 4, wherein the communication availability check is performed at a network layer level by the transmission of a test message, and the malfunction is deemed to be present if there is no response to the message received after a predetermined time and/or after a predetermined number of message attempts.

6. The method of claim 4, wherein the communication availability check is performed in a message transfer part level 3 user adaption, M3UA, layer using the M3UA_BEAT messages, and wherein the malfunction is deemed to be present if no response to the message is received after a predetermined time and/or after a predetermined number of message attempts.

7. The method of claim 4, wherein the communication availability check is performed using a HEARTBEAT timeout in a stream control transmission protocol, SCTP, and wherein the malfunction is deemed to be present if a HEARTBEAT timeout message is received.

8. The method of claim 1, wherein the detecting the malfunction comprises:
performing, by the RAN (5), a count of failed calls, or performing an analysis of call quality; and
flagging an error state if a predetermined number of calls in a given period of time fail, or fail to comply with a predefined quality level.

9. The method of claim 1, wherein the detecting the malfunction comprises:
monitoring, by the RAN (5), call signalling associated with calls performed using the RAN (5); and
flagging an error state if signalling that is considered not compliant with the relevant communication standard is detected for predefined number of calls in a predetermined period of time.

10. The method according to any preceding claim, wherein the initiating deregistration or redirection of the mobile node comprises one or more of:
redirecting the mobile node to the RAN (5) and CN (7) of a different mobile operator by transmitting a 3GPP message "RRCConnectionRelease" to the mobile node, and performing redirection to the network of the different mobile operator;
deregistering the mobile node after a failed attempt at performing an emergency call by configuring the RAN (5) to transmit a message to the mobile node that will cause it to perform a deregistration or disconnection; or
deregistering all mobile nodes connected to the RAN (5) after a failed attempt at performing an emergency call by a mobile node connected to the RAN (5) by configuring the RAN (5) to transmit a message to all connected mobile nodes that will cause them to perform a deregistration or disconnection.

11. The method of claim 10, wherein the RAN (5) is implemented under the 3GPP standard and the message or messages to cause deregistration or disconnection take the form of "Illegal MS" or "PLMN not allowed" messages.

12. The method of any preceding claim, wherein the detecting the malfunction is performed on a continuous or periodic basis.

13. A radio access network, RAN (5), for enabling the provision of an emergency communication service in a communications network operated by a network operator, the RAN (5) comprising one or more base stations and the communications network comprising the RAN (5) and a core network, CN (7), comprising one or more communication nodes for providing service and/or call functionality, the RAN (5) further comprising:
means to detect the presence of a malfunction in either the CN (7) or in a communication link between the RAN (5) and at least one communication node in the CN (7);
means to determine the identity of a mobile node attached to the RAN (5); and
means to initiate deregistration or redirection of the mobile node so as to push the mobile node to register to another communications network.

14. A computer program product comprising computer readable instructions which, when run on a computer system, cause the computer system to perform the method of any of claims 1 to 12.

15. A computer readable medium comprising the computer program product according to claim 15.
